# EUROPÄISCHE PATENTANMELDUNG

(11) **EP 0 917 083 A2**
(43) Veröffentlichungstag der Anmeldung: **19.05.1999**
(21) Anmeldenummer: 98121480.2
(22) Anmeldetag: 12.11.1998
(51) Int. Cl.: G06K 7/00

(54) **Tragbares Datenterminal mit einer elektrischen Anzeigevorrichtung**

(30) Priorität: 12.11.1997 DE 19749880
(71) Anmelder: SIEMENS AKTIENGESELLSCHAFT, 80333 München (DE)
(72) Erfinder: Heyer, Jens-Christian, Dipl.-Ing., 90480 Nürnberg (DE)

(57) **Zusammenfassung**

Das Datenhandterminal (1) enthält mit zumindest eine elektrischen Anzeigevorrichtung (15) für Daten und mindestens ein elektrisches Bedienelement (17), womit eine Umschaltung der Lage einer Datenausgabe auf der Anzeigevorrichtung bewirkbar ist. Vorteilhaft kann auf der Anzeigevorrichtung eine Kippung einer Datenausgabe relativ zu einer horizontalen Achse des Terminals (1) bewirkt werden.

## Beschreibung

Zur mobilen Verarbeitung von Daten werden vielfach sogenannte Datenhandterminals eingesetzt. Diese ermöglichen einer Bedienperson eine räumlich unbehinderte Verarbeitung unterschiedlichster Daten. Derartige Datenhandterminals weisen in vielen Fällen zumindest eine elektrische Anzeigeeinrichtung, wie z.B. eine LCD-Anzeige auf, um Daten an eine Bedienperson ausgeben zu können. Darüber hinaus können Datenhandterminals unterschiedlichste weitere Betriebsmittel enthalten. Diese können z.B. integrierte Druckwerke zur Belegausgabe, integrierte Sende- und / oder Empfangseinrichtungen zur berührungslosen Aus- und Eingabe von Daten, Leseeinrichtungen für insbesondere kartenförmige Datenträger und vieles mehr sein.

Es sind Datenhandterminals bekannt, deren Betriebsmittel symmetrisch angeordnet sind zur Körper- bzw. Sichtachse einer Bedienperson, welche das Datenhandterminal in der rechten bzw. linken Hand hält. So sind z.B. Anzeige- und Bedienelemente in dieser Weise sichtachsensymmerisch z.B. auf der Oberseite des Gehäuses eines derartigen Datenhandterminals angebracht. Ferner sind weitere Betriebsmittel, wie z.B. Leseeinrichtungen für Datenträger bzw. z.B. Belegdrucker ebenfalls bezüglich dieser Symmetrieachse bedienbar angeordnet. Dies hat zur Folge, daß z.B. Datenträger, über Öffnungen in das Gehäuse eingeführt werden müssen, welche entsprechend dieser Symmetrie angeordnet sind. Diese Aufnahmeöffnungen befinden sich in der Regel entweder an der dem Körper einer Bedienperson zugewandten, unteren Kante oder an der abgewandten, oberen Kante des Gehäuses eines Datenhandterminals. Diese Öffnungen sind für eine Bedienperson zwar sowohl mit der rechten als auch mit der linken Hand in der gleichen Weise zugänglich. Dennoch sind die damit verbundenen Handhabungen für eine Bedienperson vielfach umständlich und nicht ergonomisch.

Sind dagegen z.B. die Aufnahmeöffnungen zur Einführung z.B. von kartenförmigen Datenträgern in entsprechende Leseeinrichtungen an seitlichen Kanten des Gehäuses eines Datenhandterminals angeordnet, so sind zwar die damit verbunden Hantierungen für eine Bedienperson möglicherweise leichter ausführbar. Dennoch verursachen derartige Anordnungen in Verbindung mit den auf der Gehäuseoberseite angeordneten Bedienelementen eines Datenhandterminals in der Regel Handhabungen, welche nicht mehr symmetrisch zur Körper- bzw. Sichtachse einer Bedienperson sind, und somit nicht mehr in der gleichen Weise mit der rechten oder der linken Hand ausführbar sind.

Der Erfindung liegt die Aufgabe zu Grunde, ein Datenhandterminal so weiter auszubilden, daß sowohl eine einfache und ergonomische Handhabung von allen Betriebsmitteln des Terminals, als auch eine uneingeschränkte Bedienung durch eine Bedienperson mit einer von dieser ausgewählten Hand möglich ist.

Die Aufgabe wird gelöst mit dem in Anspruch 1 angegebenen Datenhandterminal. Weitere, vorteilhafte Ausführungsformen der Erfindung sind in Unteransprüchen enthalten. In weiteren Ansprüchen sind vorteilhafte Verwendungen der erfindungsgemäßen Datenhandterminals angegeben.

Die Erfindung wird desweiteren anhand der in den nachfolgend kurz angeführten Figuren dargestellten Ausführungsbeispiele weiter erläutert. Dabei zeigt
- FIG 1: eine Draufsicht auf eine erste beispielhafte Ausführungsform eines Datenhandterminals gemäß der Erfindung,
- FIG 2: eine weitere Draufsicht auf das Datenhandterminal von Figur 1, wobei gemäß der Erfindung die Lage der Datenausgabe auf der Anzeigevorrichtung umgeschaltet ist,
- FIG 3: eine weitere Draufsicht auf das Datenhandterminal von Figur 1, wobei gemäß der Erfindung die Lage der Datenausgabe auf der Anzeigevorrichtung umgeschaltet und das Datenhandterminal gekippt ist,
- FIG 4: eine Draufsicht auf eine zweite beispielhafte Ausführungsform eines Datenhandterminals gemäß der Erfindung mit einer zusätzlichen Lese- und/oder Beschreibeinrichtung für kartenförmige Datenträger,
- FIG 5: eine weitere Draufsicht auf das Datenhandterminal von Figur 4, wobei gemäß der Erfindung die Lage der Datenausgabe auf der Anzeigevorrichtung umgeschaltet und das Datenhandterminal gekippt ist,
- FIG 6: eine Seitenansicht auf eine dritte beispielhafte Ausführungsform eines Datenhandterminals gemäß der Erfindung mit einer zusätzlichen Bedruckeinrichtung für kartenförmige Datenträger, und
- FIG 7: eine Draufsicht auf das Datenhandterminal von Figur 6.

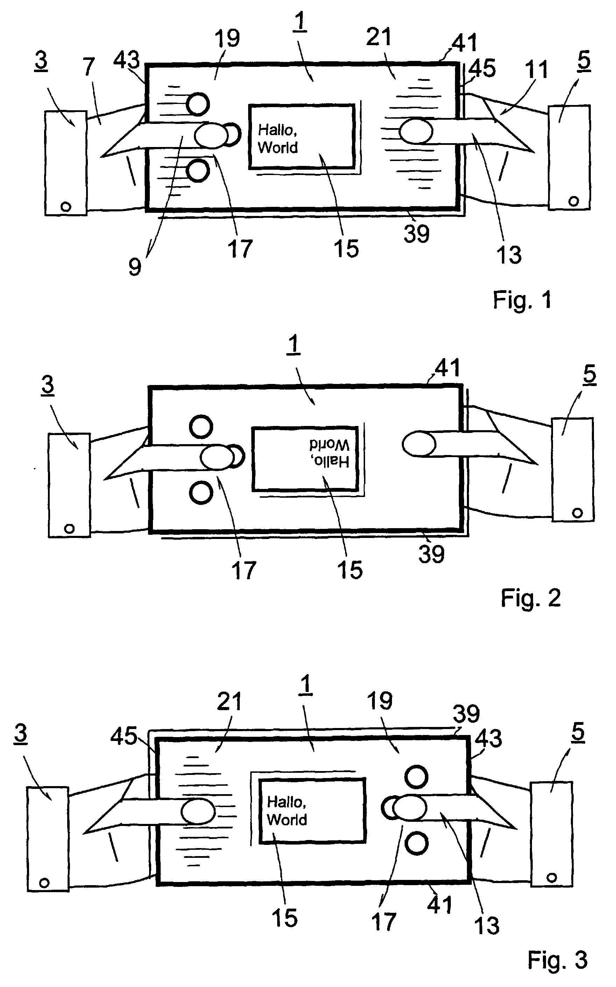

Figur 1 zeigt eine Draufsicht auf das Gehäuse einer beispielhaften, ersten Ausführungsform eines erfindungsgemäßen Datenhandterminals 1. Die Draufsicht entspricht dabei der Blickrichtung einer Person, welche das Datenhandterminal hält. In Figur 1 sind zum Zwecke der besseren Anschauung ausschnittsweise eine linke bzw. eine rechte Hand 3 bzw. 5 mit jeweils einem Handrücken 7 bzw. 11 und jeweils einem Daumen 9 bzw. 13 dargestellt. Das Datenhandterminal 1 wird hiermit beispielsweise durch Zugriff über dessen linke bzw. rechte vertikale Gehäusequerkante 43 bzw. 45 gehalten.

Das Datenhandterminal enthält erfindungsgemäß zumindest eine elektrische Anzeigevorrichtung 15 für Daten und mindestens ein elektrisches Bedienelement 17, womit eine Umschaltung der Lage einer Datenausgabe auf der Anzeigevorrichtung 15 bewirkbar ist. Im Beispiel der Figur 1 ist als Datenausgabe ein exemplarischer Text gezeigt. Die Umschaltung der Lage der Datenausgabe erfolgt beispielhaft durch den Daumen 9 der linken Hand 3 einer Bedienperson, welcher auf ein, beispielhaft in Form eines Tasters ausgeführtes elektrisches Bedienelement 17 eingreift. Über die rechte Hand 5 kann das Datenhandterminal 1 durch Zugriff über die rechte vertikale Gehäusequerkante 45 gehalten durch die Bedienperson gehalten werden.

In den Figuren 2 und 3 sind mögliche Ergebnisse derartiger Umschaltungen beispielhaft dargestellt. Dabei ist der exemplarische Ausgabetext 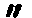 Hallo, world" auf der Anzeigevorrichtung 15 relativ zu einer horizontalen Achse des Terminalgehäuses, z.B. der unteren bzw. oberen horizontalen Gehäuselängskante 39 bzw. 41, gekippt.

Im Beispiel der Figur 2 wird das Datenhandterminal 1 im Vergleich zur Figur 1 unverändert gehalten. Eine Umschaltung der Lage einer Datenausgabe ermöglicht es in diesem Fall, daß auch eine zweite Person, welche der das Datenhandterminal haltenden ersten Person gegenübersteht, die jeweils auf der Anzeigevorrichtung ausgegebenen Daten lesen kann, ohne das die erste Person die Haltung des Datenhandterminals z.B. durch Umgreifen der Hände 3,7, durch Schwenkungen oder andersartige Hantierungen verändern müßte.

Im Beispiel der Figur 3 ist das Gehäuse des Datenhandterminals 1 im Vergleich zur Figur 1 um ca. 180 Grad geschwenkt. Es wird von der jeweiligen Bedienperson somit quasi 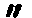 auf dem Kopf" stehend gehalten. Eine Umschaltung der Lage einer Datenausgabe ermöglicht es in diesem Fall, daß eine Person das Datenhandterminal haltende Person selbständig auswählen kann, welche Hand z.B. Betätigungen von elektrischen Bedienelementen auf der Gehäuseoberfläche des Terminals ausführen soll und insbesondere welche Hand die sichere Haltung des Datenterminals gewährleisten soll. Im Beispiel ist nun das Bedienelement 17, womit eine Lageumschaltung der Ausgabe von Daten auf der Anzeigevorrichtung bewirkbar ist, z.B. über den Daumen 13 der rechten Hand 5 der Bedienperson erreichbar. Die linke Hand 3 hat demgegenüber in diesem Fall die Aufgabe der sicheren Halterung der Datenhandterminals.

Vorteilhaft weist das erfindungsgemäße Datenhandterminal 1 zusätzlich eine Verarbeitungseinheit auf, welche zumindest die Ausgabe von Daten auf der Anzeigevorrichtung 15 steuert. Dabei wirkt das mindestens eine elektrische Bedienelement 17 zur Umschaltung der Lage einer Datenausgabe auf der Anzeigevorrichtung 15 auf die Verarbeitungseinheit ein. Über das Bedienelement wird bei einer derartigen Ausführung somit indirekt über die Verarbeitungseinheit auf die Lage einer Datenausgabe eingewirkt. Die in diesem Falle zwischengeschaltete Verarbeitungseinheit kann vorteilhaft die Auswahl, Aufbereitung und für die Anzeige optimierte Ausgabe von für die Anzeigevorrichtung vorgesehenen Daten übernehmen. In aller Regel ist eine derartige Verarbeitungseinheit im Inneren des Gehäuses eines Datenhandterminals angeordnet, so daß diese bei den in den Figuren dargestellten Draufsichten nicht unmittelbar sichtbar ist.

Wie im Beispiel der Figur 1 bereits dargestellt ist, kann gemäß einer weiteren Ausführung der Erfindung das mindestens eine elektrische Bedienelement 17 vorteilhaft in einem Feld 19 angeordnet sein, welches sich im Bereich von einer seitlichen vertikalen Gehäusequerkante befindet. In der Ausführung von Figur 1 ist dies beispielhaft die linke, vertikale Gehäusequerkante 43. Hiermit wird eine besonders leichte Zugänglichkeit des elektrischen Bedienelementes 17 durch die Finger der Hand einer Bedienperson ermöglicht, im Beispiel des Daumens 9 der linken Hand 3. Vorteilhaft sind in einem solchen Feld mehrere elektrische Bedienelemente 17 nebeneinanderliegend angeordnet.

Vorteilhaft weist das Datenhandterminal gemäß einer weiteren Ausführungsform der Erfindung ein Feld auf, welches als ein Griffbereich für die Hand einer Bedienperson ausgebildet ist. In den Beispielen der Figuren 1, 2 und 3 ist ein derartiges Feld 21 bereits dargestellt. Das Feld befindet sich im Bereich einer seitlichen vertikalen Gehäusequerkante 45. Diese liegt derjenigen seitlichen vertikalen Gehäusequerkante 43 gegenüber, welche das Feld 19 mit dem mindestens einen elektrischen Bedienelement 17 trägt. Wie in den Figuren 1, 2 und 3 ebenfalls bereits dargestellt ist, sind dabei vorteilhaft das Feld 19 mit dem mindestens einen Bedienelement 17, die Anzeigevorrichtung 15 und das als Griffbereich ausgebildete Feld 21 annähernd in einer horizontalen Ebene nebeneinander liegend angeordnet. Dabei greift bei den in Figuren 1 und 2 dargestellten Beispielen die rechte Hand 5 einer Bedienperson auf das Griffbereichsfeld 21 ein, während in Figur 3 auf Grund der quasi gestürzten Halterung des Datenhandterminals 1 die linke Hand 3 über die seitliche vertikale Gehäusekante 43 hinweg auf das Feld 21 eingreift.

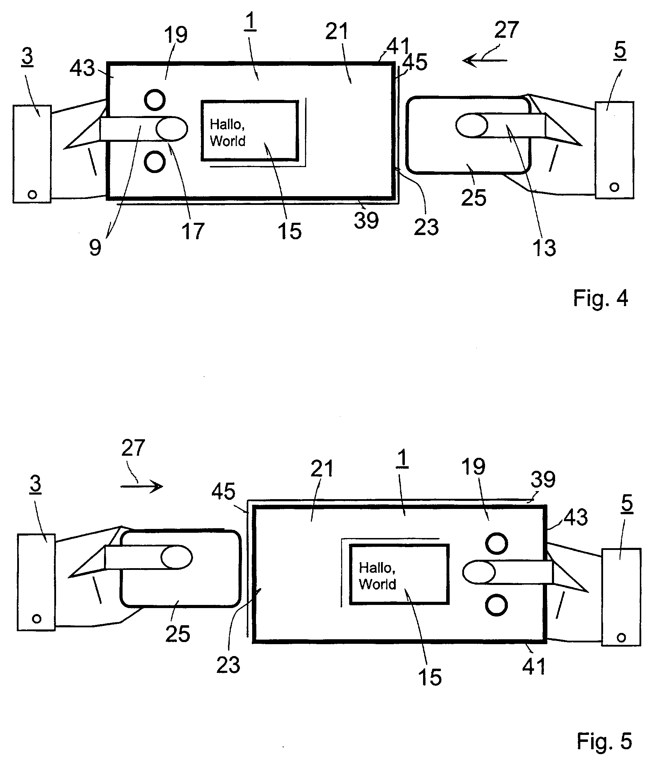

In den Figuren 4 und 5 ist eine weitere Ausführung des erfindungsgemäßen Datenterminals beispielhaft dargestellt.

Dieses Datenhandterminal 1 weist zusätzlich eine Lese- und/oder Beschreibeinrichtung 23 für bevorzugt kartenförmige Datenträger auf. Im Beispiel der Figuren 4 und 5 ist dieser Datenträger beispielhaft in Form einer elektronischen Chipkarte 25 bzw. einer Magnetstreifenkarte ausgeführt. Vorteilhaft ist die Lese- und/oder Beschreibeinrichtung für insbesondere kartenförmige Datenträger so angeordnet, daß Datenträger in Richtung auf eine vertikale Gehäusequerkante seitlich einführbar sind.

Im Beispiel der Figur 4 wird ein beispielhafter, kartenförmiger Datenträger von einer Bedienperson mittels deren rechter Hand 5 gehalten und in Richtung auf die vertikale Gehäusequerkante 45 seitlich zugeführt. Die Zuführungsrichtung ist durch einen Pfeil 27 symbolisiert. Unterhalb des als Griffbereich dienenden Feldes 21 ist im Inneren des Gehäuses des Datenhandterminals eine Lese- und/oder Beschreibeinrichtung 23 angeordnet, welche über eine, in der vertikalen Gehäusequerkante 45 befindliche Aufnahmeöffnung von der Seite zugänglich ist. Hierüber kann der Datenträger 25 zum Zwecke des Datenaustausches in das Datenhandterminal eingeführt werden.

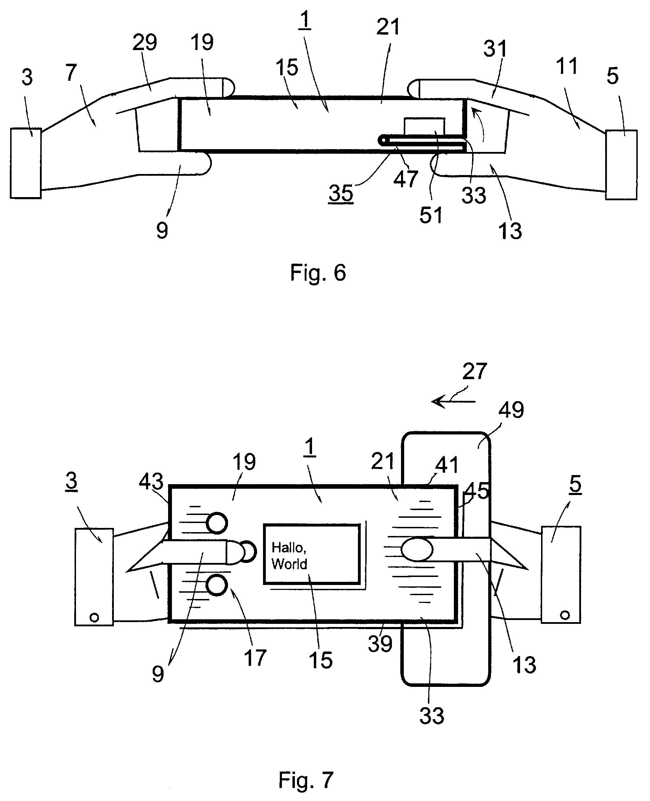

Das Datenhandterminal wird im Beispiel der Figur 4 von einer Bedienperson in der gleichen Weise gehalten, wie das in den Figuren 1 und 2 dargestellte Datenhandterminal. Für den Fall, daß eine Bedienperson es bevorzugt, z.B. kartenförmige Datenträger mit der anderen Hand zu hantieren, so ermöglicht es die Erfindung, daß die Lage von Datenausgaben auf der Anzeigevorrichtung entsprechend umgeschaltet wird. Diese sind somit auch dann lesbar, wenn eine Bedienperson das Datenhandterminal in einer anderen Lage hält. So ist in Figur 5 der Fall dargestellt, daß eine Bedienperson einen bevorzugt kartenförmigen Datenträger 25 mit der linken Hand hält. In diesem Fall kann das erfindungsgemäße Datenhandterminal quasi auf dem Kopf stehend auch mit der rechten Hand 5 gehalten werden. Die Lese- und/oder Beschreibeinrichtung 23 mit deren Aufnahmeöffnung befindet sich nun auf der linken Seite. Ein Datenträger 25 kann somit von einer Bedienperson über deren linke Hand 3 in einfacher Weise in die Lese- und/oder Beschreibeinrichtung 23 eingeführt werden. Damit auch bei einer derartigen Haltung eine Datenausgabe auf der Anzeigevorrichtung 15 lesbar ist, kann deren Lage gemäß der Erfindung durch entsprechende Betätigung des Bedienelementes, im Beispiel der Figuren 5 und 6 über den Daumen 13 der rechte Hand 5, umgeschaltet werden. Bevorzugt wird auch bei dieser Umschaltung eine Kippung der Lage der Datenausgabe relativ zu einer horizontalen Achse des Datenterminals bewirkt, d.h. im Beispiel der Figuren 5 und 6 um einen Winkel von 180 Grad bezogen eine der beiden horizontalen Gehäuselängskanten 39 bzw. 41.

Gemäß einer weiteren Ausführung der Erfindung kann das Datenterminal zusätzlich eine Bedruckeinrichtung für kartenförmige Datenträger, insbesondere für Billetts oder Etiketten, aufweisen. In den Figuren 6 bzw. 7 ist das Beispiel für eine entsprechende Ausführung des erfindungsgemäßen Datenterminals in Form einer Seitenansicht bzw. einer Draufsicht dargestellt. Dabei befindet sich die Bedruckeinrichtung 35 beispielhaft im Bereich der rechten vertikalen Gehäusequerkante 45 bevorzugt unterhalb des als Griffbereich für die linke Hand 5 einer Bedienperson dienenden Feldes 21. Die Bedruckeinrichtung weist einen vorteilhaft über die gesamte Gehäusequerkante 45 verlaufenden Aufnahmeschlitz 33 auf, über den bevorzugt kartenförmige Datenträger wiederum von der Seite einführbar sind. Im Beispiel der Figur 7 ist ein derartiger Datenträger 49 von einer Bedienperson mittels der rechten Hand 5 seitlich in den Aufnahmeschlitz der Bedruckeinrichtung 35 eingeführt. Im Inneren des Aufnahmeschlitzes befindet sich eine Bedruckeinheit 51. Diese kann beispielhaft in Form eines Typendruckwerkes, eines Tintenstrahldruckers oder unter Anwendung eines anderen Druckprinzips ausgeführt sein.

Mit Einführung des Datenträgers können anwendungsabhängige Beschriftungen auf die Oberfläche des Datenträgers aufgebracht werden. Die Ansteuerung der Bedruckeinheit kann wiederum vorteilhaft durch Vermittlung über eine integrierte, bevorzugt prozessorgesteuerte Verarbeitungseinheit erfolgen. Im Zusammenhang mit dem Bedruckvorgang anfallende Datenausgaben können wiederum auf der Anzeigeeinheit sichtbar gemacht werden. Falls eine Bedienperson eine Hantierung mit Datenträgern und eine Bedienung der Bedruckeinheit mit der anderen Hand bevorzugt, so kann das Datenhandterminal in der gleichen Weise wie in den Beispielen der Figuren 3 und 5 dargestellt, auch quasi auf dem Kopf stehend gehalten werden. In diesem Fall sind Datenträger mit der linken Hand von der linken Seite in die Bedruckeinheit einführbar. Auch hier ist die Lage von Datenausgaben auf der Anzeigeeinheit, welche im Zusammenhang mit dem Bedruckvorgang auftreten, in der oben beschriebenen Weise so umschaltbar, daß diese von der Bedienperson oder auch einer zweiten, der Bedienperson z.B. gegenüber stehenden Person lesbar sind.

Der Druckvorgang der Bedruckeinheit 51 kann z.B. durch einen im Inneren des Aufnahmeschlitzes angeordneten Endschalter ausgelöst werden, welcher bei Einführung eines Datenträgers insbesondere durch dessen Kante aktiviert wird. Eine andere Ausführung ist in den Figuren 6 und 7 dargestellt. Ein den Aufnahmeschlitz 33 der Bedruckeinrichtung 35 begrenzender Bereich der Außenseite des Terminals ist dabei in Form einer schwenkbaren Klemmplatte 47 derart ausgebildet, daß hiermit ein eingeführter kartenförmiger Datenträger 49 an die Bedruckeinheit 51 andrückbar ist. Wie aus der Draufsicht der Figur 7 ersichtlich ist, kann die Klemmplatte z.B. durch den Handrücken 11 betätigt werden, während die Hand 5 durch den Daumen auf dem Griffbereich 21 abgestützt wird.

Das erfindungsgemäße Datenhandterminal ist besonders zur Entwertung von insbesondere kartenförmigen Datenträgern geeignet, welche bevorzugt in Massenverkehrsmitteln, insbesondere Zügen, eingesetzt werden. Ist der Datenträger von der Art einer elektronisch lesbaren Wertkarte, z.B. einer Chipkarte oder einer Magnetstreifenkarte, so kann auch eine Teilentwertung z.B. durch Abbuchung von Beträgen mit Hilfe einer Lese- und/oder Beschreibeinrichtung gemäß den Ausführungen von Figur 4 bzw. 5 erfolgen. Ist der Datenträger von der Art einer papierförmigen Wertkarte bzw. eines Billetts, so kann eine Entwertung durch Bedruckung von deren Oberfläche mit entsprechenden Daten mit Hilfe einer Bedruckeinrichtung gemäß den Ausführungen von Figur 6 oder 7 erfolgen. Die Erfindung bietet den Vorteil, daß in beiden Fällen derartige Datenträger in einer bequemen und ergonomischen Weise dem Datenhandterminal von einer durch die jeweilige Bedienperson ausgewählten Seite zugeführt werden können. Die Lage einer damit verbundenen Datenausgabe auf der Anzeigevorrichtung kann in der erfindungsgemäßen Weise an die jeweilige Position des Datenhandterminals in der Hand des Bedieners durch Umschaltung angepaßt werden. Das erfindungsgemäße Datenhandterminal kann z.B. als eine sogenannte elektronische Schaffnerzange zur Entwertung von Fahrkarten z.B. in Massenverkehrsmitteln eingesetzt werden.

Die Erfindung ist nicht beschränkt auf die in den Figuren beispielhaft dargestellten Ausführungen von Datenhandterminals. Insbesondere können Datenhandterminals, welche von der Erfindung Gebrauch machen, auch weitere Betriebsmitteln aufweisen, wie z.B. integrierte Druckeinrichtungen, welche z.B. den Ausdruck von Quittungsbelegen unterschiedlichster Art, wie etwa aktualisierte Billetts, ermöglichen. Ferner können die elektrischen Bedienelemente in Form einer oder mehrerer, unterschiedlich umfangreicher Tastaturen ausgeführt sein. Ferner können Leseeinrichtungen integriert sein, welche an den Typ der jeweils zu verarbeitenden kartenförmigen Datenträger angepaßt sind. So können auch Leseeinrichtungen integriert sein, welche einen berührungslosen Datenaustausch in Lese- und Schreibrichtung ermöglichen. Ferner können solche Datenterminals u.U. auch Kommunikationseinrichtungen enthalten, welche eine Datenfernübertragung zu zentralen Rechnern ermöglichen.

## Patentansprüche

1. Datenhandterminal (1) zur Entwertung von insbesondere kartenförmigen Datenträgern (25,49), mit
a) einer Lese- und/oder Beschreibeinrichtung (23) für bevorzugt kartenförmige Datenträger (25), insbesondere für elektronische Chipkarten oder Magnetstreifenkarten,
b) zumindest einer elektrischen Anzeigevorrichtung (15) für Daten, und
c) mindestens einem elektrischen Bedienelement (17), Womit eine Umschaltung der Lage einer Datenausgabe auf der Anzeigevorrichtung (15) bewirkbar ist.

2. Datenhandterminal (1) nach Anspruch 1, mit
a) einer Verarbeitungseinheit zumindest zur Ausgabe von Daten auf der Anzeigevorrichtung (15), und wobei
b) das mindestens eine elektrische Bedienelement (17) zur Umschaltung der Lage einer Datenausgabe auf der Anzeigevorrichtung (15) auf die Verarbeitungseinheit einwirkt.

3. Datenhandterminal (1) nach Anspruch 1, wobei das mindestens eine elektrische Bedienelement (17) auf der Anzeigevorrichtung (15) eine Kippung einer Datenausgabe relativ zu einer horizontalen Achse des Terminals (1) bewirkt.

4. Datenhandterminal (1) nach einem der vorangegangenen Ansprüche, wobei das mindestens eine elektrische Bedienelement (17) in einem Feld (19) angeordnet ist, welches sich im Bereich von einer seitlichen vertikalen Gehäusequerkante (43) befindet.

5. Datenhandterminal (1) nach Anspruch 4, wobei ein Feld (21) im Bereich einer seitlichen vertikalen Gehäusequerkante (45), welche derjenigen seitlichen vertikalen Gehäusequerkante (43) dem Feld (19) mit dem mindestens einen elektrischen Bedienelement (17) gegenüberliegt, als ein Griffbereich für die Hand (5) einer Bedienperson ausgebildet ist.

6. Datenhandterminal (1) nach Anspruch 5, wobei das Feld (19) mit dem mindestens einen Bedienelement (17), die Anzeigevorrichtung (15) und das als Griffbereich ausgebildete Feld (21) annähernd in einer horizontalen Ebene nebeneinander liegend angeordnet sind.

7. Datenhandterminal (1) nach einem der vorangegangenen Ansprüche, wobei die Lese- und/oder Beschreibeinrichtung (23) so angeordnet ist, daß Datenträger (25) in Richtung (27) auf eine vertikale Gehäusequerkante (43,45) seitlich einführbar sind.

8. Datenhandterminal (1) nach einem der vorangegangenen Ansprüche, mit einer Bedruckeinrichtung (35) für insbesondere kartenförmige Datenträger (49), insbesondere für Billetts oder Etiketten.

9. Datenhandterminal (1) nach Anspruch 8, wobei die Bedruckeinrichtung (35) für insbesondere kartenförmige Datenträger (49) so angeordnet ist, daß ein Datenträger (49) in Richtung (27) auf eine vertikale Gehäusequerkante (43,45) seitlich einführbar ist.

10. Datenhandterminal (1) nach Anspruch 8 oder 9, wobei die Bedruckeinrichtung (35) einen Aufnahmeschlitz (33) zur Einführung von insbesondere kartenförmigen Datenträgern (49) aufweist, und ein den Aufnahmeschlitz (33) begrenzender Bereich der Außenseite des Terminals als eine schwenkbare Klemmplatte (47) derart ausgebildet ist, daß ein eingeführter Datenträger (49) an eine Bedruckeinheit (51) andrückbar ist.

11. Verwendung eines Datenhandterminals nach einem der Ansprüche 1 bis 11 zur Entwertung von insbesondere kartenförmigen Datenträgern (25,49) in Massenverkehrsmitteln, insbesondere in Zügen.
